# EUROPEAN PATENT SPECIFICATION

(11) **EP 3 488 689 B1**
(45) Date of publication and mention of the grant of the patent: **16.09.2020**
(21) Application number: 18197291.0
(22) Date of filing: 27.09.2018
(51) Int. Cl.: A01J 25/16

(54) **STORAGE UNIT FOR CHEESE**
LAGERUNGSEINHEIT FÜR KÄSE
UNITÉ D'ENTREPOSAGE DE FROMAGES

(30) Priority: 24.11.2017 IT 201700135506
(43) Date of publication of application: 29.05.2019
(73) Proprietor: Rosss S.p.A., 50038 Scarperia E San Piero (FI) (IT)
(72) Inventor: BETTINI, Stefano, 50038 Scarperia e San Piero (Firenze) (IT); BETTINI, Sandro, 50038 Scarperia e San Piero (Firenze) (IT)
(74) Representative: Lunati & Mazzoni S.r.L.

(56) References cited:
- EP-A1- 2 743 214
- CH-A5- 685 226
- US-A1- 2015 336 741

## Description

The present invention relates to a "scalera" of the type specified in the preamble of the first claim.

As is known, "scaleras" are special ripening storage racks for food, and precisely for cheeses such as Grana Padano and Parmigiano Reggiano.

"Scaleras" comprise racks parallel to each other and spaced apart so as to be separated by an aisle.

Each rack has a vertical support structure and overhanging shelves placed on opposite sides with respect to the support structure. Each shelf defines a support surface for a single row of food parallel to the aisle so as to allow a quick and easy handling of the food.

Such handling provides that the operator, by using a lift truck, shall rise up to the shelf bearing the food to be handled, manually take the food from the shelf, return to the ground with the food, so that he/she can then perform operations such as quality inspection, branding, turning the food upside down, cleaning the food or the shelf.

An example of automatic robot for handling of cheeses is disclosed in CH 685226 A5.

The described prior art has a few major drawbacks.

In particular, the operations performed are very dangerous.

For example, the branding can cause fires, which due to the high flammability of the cheese are almost impossible to put out, so that the firemen have no choice but to let the entire "scalera" burn.

This dangerousness is also due to the high weight of the food and the impressive height of the shelves.

Another drawback is that the known "scaleras", due to the considerable heights, require complicated and dangerous operations for the handling of cheese or other food items placed on the shelves to ripen.

In this context, the technical task underlying the present invention is to devise a "scalera", which is capable of substantially obviating at least some of the above-mentioned drawbacks.

Within the scope of said technical task, a major object of the invention is to obtain a "scalera" which allows simple and quick handling of a food item and especially of a whole cheese.

Another major object of the invention is to provide a "scalera" which allows a food item to be handled in total safety.

The technical task and the specified objects are achieved by means of a scalera as claimed in the appended claim 1. Preferred embodiments are described in the dependent claims.

The features and advantages of the invention will be clarified in the following detailed description of preferred embodiments of the invention, with reference to the accompanying drawings, in which:

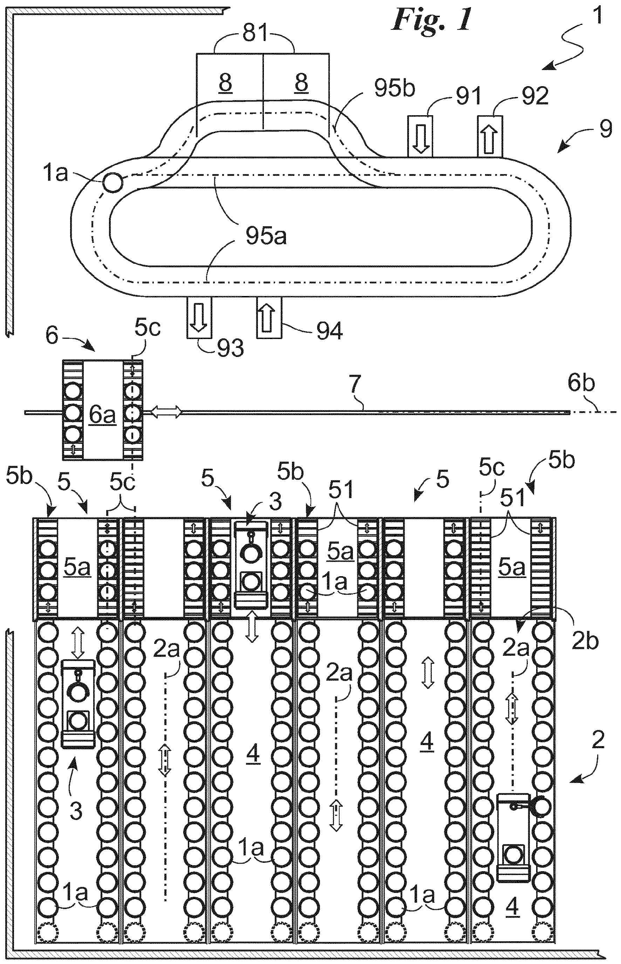

- **Fig. 1**: shows a "scalera" according to the invention;
- **Fig. 2**: illustrates a part of the "scalera" according to the invention;
- **Fig. 3a**: shows a device of the "scalera" according to the invention;
- **Fig. 3b**: shows a second view of the device in Fig. 3; and
- **Fig. 4**: is a different component of the "scalera" according to the invention.

In the present document, the measures, values, shapes and geometric references (such as perpendicularity and parallelism), when associated with terms like "about" or other similar terms such as "almost" or "substantially", are to be understood as unless measurement errors or inaccuracies due to production and/or manufacturing defects and, especially, unless a slight difference from the value, the measure, the shape, or the geometric reference with which it is associated. For example, these terms, if associated with a value, preferably indicate a difference not exceeding 10% of the value itself.

Furthermore, when used, terms such as "first", "second", "higher", "lower", "main" and "secondary" do not necessarily identify an order, a priority relationship or a relative position, but can simply be used to distinguish more clearly the different components from each other.

The measurements and the data reported in this text are to be considered, unless otherwise indicated, as carried out in the International Standard Atmosphere ICAO (ISO 2533).

Unless otherwise specified, as is apparent from the following discussion, terms such as "treatment", "data processing", "determination", "calculation", or the like, are understood to refer to the action and/or processes of a computer or similar electronic computing device which manipulates and/or transforms data represented as physical, such as electronic sizes of registers of a computer system and/or memories, into other data similarly represented as physical quantities in computer systems, registers or other storage, transmission or information display devices. With reference to the Figures, the "scalera" according to the invention is indicated as a whole by the numeral **1.**

The "scalera" 1 is used at least for the ripening of food **1a**, and precisely of cheeses (whole cheeses) such as Grana Padano and Parmigiano Reggiano.

The scalera 1 comprises one or more racks **2.**

Each rack 2 defines a preferably substantially horizontal longitudinal axis **2a.**

In this document the terms "horizontal" and "vertical" identify a perpendicular and a parallel direction, respectively, with respect to the gravitational gradient.

Each rack 2 comprises shelves **21** for supporting the food items 1a and suitably a support structure **22** for the shelves 21.

The shelves 21 are parallel to each other, and preferably to the longitudinal axis 2a, i.e. horizontal. To be precise, they are inclined at an inclination angle of less than 5°, and in detail almost comprised between 1° and 2°, so that the distal end of the structure 22 has a greater height. The inclination angle has its centre at the point where a shelf is constrained to the support structure 22 and is measured between the shelf 21 and a horizontal plane in a counterclockwise direction.

The shelves 21 are vertically spaced apart from each other.

Each shelf 21 is adapted to support a single row of food items 1a. This row of food items is parallel to the longitudinal axis 2a.

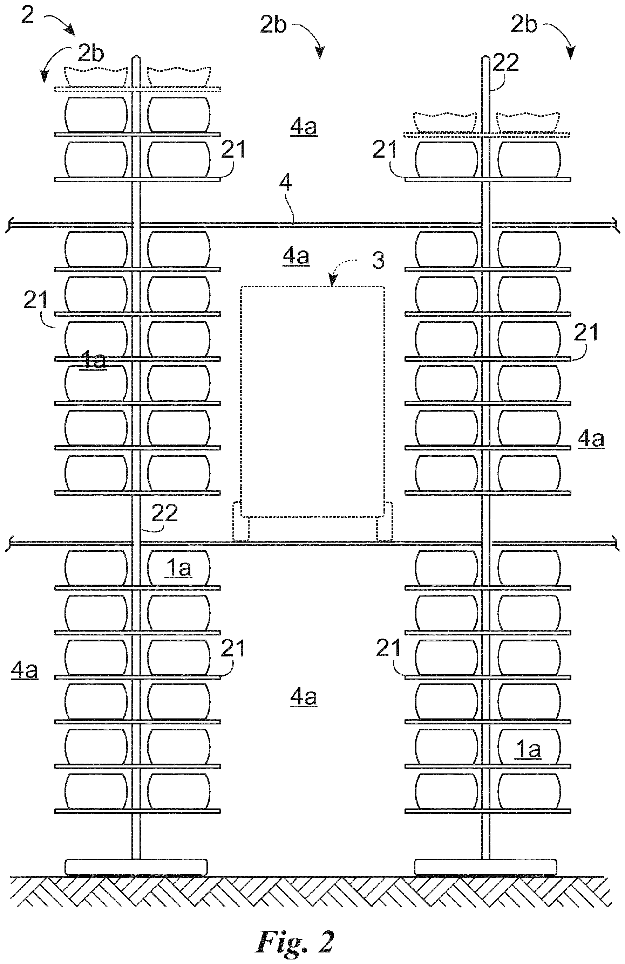

To be precise, a rack 2 includes a support structure 22 and first shelves 21 and second shelves 21 located on opposite sides of the first shelves 21 with respect to the support structure 22 as shown in Fig. 2. Thus, the food items 1a are available on the first shelves 21 along first rows and on the second shelves 21 along second rows opposite to the first rows with respect to the support structure 22.

The racks 2 are substantially parallel to each other and spaced apart so that each pair of adjacent racks 2 defines therebetween an aisle **2b** which is overlooked by at least one shelf 21 per rack 2. One aisle 2b is overlooked by one or more first rows of food items 1a of a rack 2 and by one or more second rows of food items 1a of another rack 2.

The width of a rack, and thus of an aisle 2b, calculated horizontally and perpendicularly to the longitudinal axis 2a, is almost less than 3 m, in detail almost between 3 m and 0.5 m, and precisely between 0.9 m and 1.5 m.

The "scalera" 1 comprises at least one movable slider **3** for the handling of the food 1a.

The movable slider 3 is adapted to move parallel to the longitudinal axis 2a along an aisle 2b so as to be able to handle the food 1a of at least one, and in detail of both, of the racks 2 overlooking an aisle 2b.

The movable slider 3 comprises handling means **31** for handling at least the food 1a.

The handling means 31 may comprise at least one food 1a grabbing apparatus **31a.** The grabbing apparatus 31a is adapted to grab, for example by clamping, lift and move a food item 1a from one or more shelves 21 and/or from the slider itself.

In detail, the handling means 31 may comprise two grabbing apparatuses 31a, each of which is adapted to move a food item 1a with respect to one or more of the racks 2 of an aisle 2b. Alternatively, a grabbing apparatus 31a can handle food items 1a of both of said racks 2.

The handling means 31 may comprise a cleaner, such as brushes, for cleaning the food 1a and/or at least part of the shelf 21, precisely the portion of the shelf 21 occupied by the food 1a and/or for cleaning the floor.

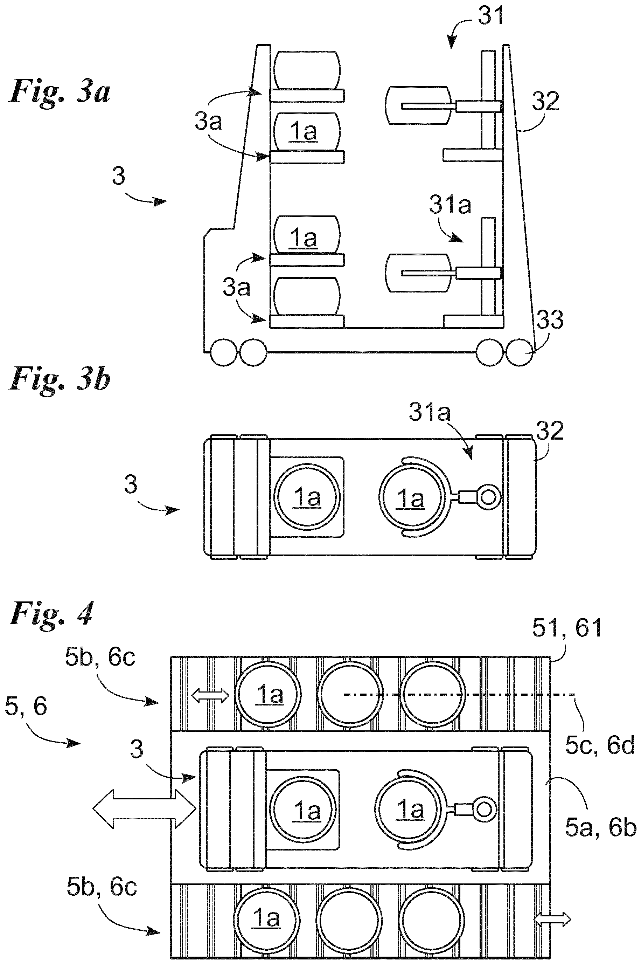

The movable slider 3 (Figs. 3a and 3b) comprises a base body **32** defining at least one loading area **3a** for loading the food 1a onto the movable slider 3, and precisely a loading area 3a facing each rack 2 overlooking an aisle 2b.

Each loading area 3a is adapted to receive at least one food item 1a, and in detail a single food item 1a.

Preferably, the base body 32 defines multiple loading areas 3a, preferably four. Said loading areas 3a may be vertically superimposed as in Fig. 3a.

The movable slider 3 comprises handling means **33** for moving the slider 3 along the aisle 2b.

The movable slider 3 is preferably automatically guided (i.e. an AGV or *Automatic Guided Vehicle*).

The "scalera" 1 comprises, for each aisle 2b, partitions **4** suitable for partitioning the aisles 2b into sub-aisles **4a** for the sliding of the movable slider 3.

The sub-aisles 4a are substantially parallel to the longitudinal axis 2a and suitably for the entire extension of the aisle 2b.

Each sub-aisle 4a has, for each rack 2 of the aisle 2b, at least one shelf 21 and therefore at least one row of food items 1a facing said sub-aisle 4a. Preferably, a plurality of shelves 21 of each rack 2 faces one sub-aisle 4a. More preferably, the number of shelves 21 per rack 2 facing a sub-aisle 4a is between 2 and 8, and precisely between 4 and 6, and preferably is 6.

Each partition 4 is adapted to support at least one movable slider 3, thus allowing it to slide along a sub-aisle 4a so as to handle the food items 1a placed on the shelves 21 facing the sub-aisle 4a.

Preferably, the partition 4 can comprise a support surface suitably subtended between the racks 2 defining the aisle 2b.

The support surface may be adapted to support the movable slider 3.

The support surface can be walked on, so as to allow an operator to move thereon. Alternatively or additionally, the partition 4 may comprise at least one guide or other device constrained to the rack 2, which the movable slider 3 engages so as to be supported thereby and with respect to which it can slide by travelling along the sub-aisle 4a.

Preferably, the partition 4 comprises at least one guide for the movable slider 3 and a support surface that can be walked on.

It should be noted that the movable slider 3 can slide to take the food from the racks 2 on the partition 4 and on the ground.

The "scalera" 1 comprises at least one lift **5.**

Preferably, the "scalera" 1 comprises a lift 5 for each aisle 2b suitably placed at the head of the aisle itself.

The lift 5 is adapted to allow the movable slider 3 to change the sub-aisle 4a in which to move. In detail, it is adapted to move the movable slider 3 at least along a lifting axis.

The lifting axis is substantially perpendicular to the longitudinal axis 2a, and to be precise substantially vertical.

The lift 5 comprises a lifting area **5a** for at least one movable slider 3, and in detail for a single movable slider 3.

The lift 5 is adapted to move at least one food item 1a along the lifting axis. In detail, it is adapted to move at least one food item 1a and at least one movable slider 3 along the lifting axis.

In order to move one or more food items 1a, the lift 5 comprises at least one vertical transport area **5b** for a food item 1a suitably defining an extension of the shelves 21 of a rack 2.

In detail, the lift 5 comprises at least a first vertical transport area 5b and at least a second vertical transport area 5b suitably defining, respectively, an extension of the first and second shelves 21 of a rack 2.

Preferably, the lift 5 comprises at least two, in detail two, vertically superimposed first vertical transport areas 5b and comprises at least two, in detail two, vertically superimposed second vertical transport areas 5b. Adjacent vertical transport areas 5b have a vertical distance substantially equal to the vertical distances between adjacent shelves 21 of a rack 2.

Each vertical transport area 5b is adapted to receive at least one food item 1a, and in detail three food items 1a.

The lift 5 may comprise, for each vertical transport area 5b, a conveyor **51** defining the vertical transport area 5b and adapted to move the food item 1a located in said vertical transport area 5b along a translation axis **5c.**

The translation axis 5c is substantially parallel to the longitudinal axis 2a.

The conveyor 51 may be a belt or roller conveyor.

As an alternative or in addition to the conveyor 51, the lift 5 may include moving means suitable to load and/or unload a food item 1a from the vertical transport area 5b. Said moving means may be adapted to take the food item 1a from the movable slider 3 and/or to put it back thereon.

The lift 5 is preferably automatically guided.

The "scalera" 1 comprises at least one shifter **6** (Fig. 4).

The shifter 6 is adapted to allow the movable slider 3 to change the aisle 2b in which to move. In detail, it is adapted to move the movable slider 3 at least along a translation axis **6a** substantially perpendicular to the longitudinal axis 2a and the lifting axis 5a. The translation axis 6a is substantially perpendicular to the aisles 2b. The shifter 6 comprises at least one stopping area **6b** for at least one movable slider 3, and in detail for a single movable slider 3.

The height from the ground of the stopping area 6b is substantially equal to the height from the ground of the lifting area 5a measured with the lift 5 on the ground. The shifter 6 is adapted to move at least one food item 1a at least along the translation axis 6a. In detail, it is adapted to move at least one food item 1a and at least one movable slider 3 along the translation axis 6a.

In order to move one or more food items 1a, the shifter 6 comprises at least one horizontal transport area **6c** for a food item 1a suitably defining an extension of the at least one vertical transport area 5b.

In detail, the shifter 6 comprises at least a first horizontal transport area 6c and at least a second horizontal transport area 6c suitably defining, respectively, an extension of the first and second vertical transport areas 5b.

Preferably, the shifter 6 comprises at least two, in detail two, vertically superimposed first horizontal transport areas 6c and comprises at least two, in detail two, vertically superimposed second horizontal transport areas 6c. Adjacent horizontal transport areas 6c have a vertical distance substantially equal to the vertical distances between adjacent vertical transport areas 5b.

Each horizontal transport area 6c is adapted to receive at least one food item 1a, and in detail three food items 1a.

The height from the ground of the horizontal transport area 6c is substantially equal to the height from the ground of the vertical transport area 5b measured with the lift 5 on the ground.

The shifter 6 may comprise, for each horizontal transport area 6c, at least one handler **61** defining a horizontal transport area 6c and adapted to move the food item 1a located in said horizontal transport area 6c along a displacement axis **6d.** The displacement axis 6d is substantially parallel to the longitudinal axis 2a, and therefore to the translation axis 5c.

The handler 61 may be a belt or roller handler.

As an alternative or in addition to the handler 61, the shifter 6 may include moving means suitable to load and/or unload a food item 1a from the horizontal transport area 6b. Said moving means may be adapted to take the food item 1a from the movable slider 3 and/or to put it back thereon.

The shifter 6 is placed on the ground and conveniently close to the one or more lifts 5 so that the movable slider 3 and/or food 1a can pass from the shifter 6 to the lifts 5, and vice versa.

The shifter 6 is preferably automatically guided.

In order to allow the shifter to have this motion, the "scalera" 1 comprises guide means 7 for guiding the shifter 6, which define said translation axis 6a.

The guide means 7 may be mechanical (for example a rail) or optical.

It is noted that in some cases the shifter 6 and the lift 5 can identify a single device adapted to allow the movable slider 4 to change both the sub-aisle 4a and the aisle 2b in which to move.

In order to allow the execution of operations such as quality inspection and branding, the "scalera" 1 comprises one or more work stations **8** in which said operations are carried out.

To be precise, the "scalera" 1 comprises at least two work stations 8, i.e. a first work station 8 for quality inspection of a food item 1a and a second work station 3 for the branding of the food item 1a.

Each work station 8 comprises an insulation room **81** adapted to separate the work station 8 from the racks 2, and in particular from the rest of the "scalera" 1.

Lastly, the "scalera" 1 comprises a handling system **9** for handling the food 1a. The handling system 9 is adapted to allow the food 1a to be loaded and/or taken from the "scalera" 1, and in particular from one of the movable slider 3 and the shifter 6, and preferably from both the movable slider 3 and the shifter 6.

The handling system 9 comprises at least one area for unloading and loading the food 1a. Preferably, it comprises a loading area **91** in which the food items 1a are placed on the system 9 or on the shifter 6, and an unloading area **92** in which the food items 1a are taken from the handling system 9 or from the shifter 6.

The handling system 9 comprises at least one passageway in which the food items 1a pass from the system 9 to the movable slider 3 and/or to the shifter 6. To be precise, it comprises at least a first passageway **93** in which the food items 1a pass from the system 9 to the movable slider 3 and/or to the shifter 6, and at least a second passageway **94** in which the food items 1a pass from the movable slider 3 and/or from the shifter 6 to the handling system 9. More precisely, the handling system 9 comprises two first passageways 93 and two second passageways 94. The handling system 9 comprises a carrier **95** for moving the food items 1a among the areas 91, 92, 93 and 94.

The carrier 95 is preferably continuous (for example a belt carrier) and defines a movement path **95a** for moving the food items 1a among the areas 91, 92, 93 and 94.

Preferably, the movement path 95a is closed.

In the event of one or more work stations 8, the carrier 95 is adapted to move the food items 1a among the areas 91, 92, 93 and 94 and said stations 8.

In detail, the carrier 95 may comprise a deviation **95b** from the movement path 95a for allowing the food 1a to access the rooms 81 and thus reach the work stations 8. In detail, the deviation 95b is adapted to allow the food 1a to deviate from the movement path 95a, to reach the work stations 8, and return to the movement path 95a.

The "scalera" 1 finally comprises a control unit for controlling the operation of the "scalera" 1.

Said control unit is adapted to control the operation of the movable slider 3, the lift 5, the shifter 6 and, if applicable, the handling system 9.

The control unit comprises a food database linking each food item 1a to a position in the "scalera" 1, and then an identifier for the sub-aisle 4a, the shelf 21 and the position on the shelf 21 on which the food 1a is placed.

Said food database can link each food item 1a to each operation performed and to the date of said operation. In detail, the food database can link each food item 1a to the time of handling, the type of handling performed, and any operations of quality inspection and/or branding.

The operation of the "scalera", previously described in structural terms, is as follows. When it is necessary to handle one or more food items 1a, and for example to quality inspect and brand a food item 1a, the control unit, automatically or in response to a command given by the operator via a processor, commands the removal of the food item 1a to be handled and identifies its position by means of the food database. On the basis of said position, the movable slider 3 places itself in the stopping area 6b, and the shifter 6 brings it at the lift 5 of the aisle 2b overlooked by the food item 1a to be handled.

The movable slider 3 comes out of the shifter 6 and places itself in the lifting area 5a, and the lift 5 lifts it up to the sub-aisle 4a of the food item 1a to be handled. The movable slider 3 exits the lifting area 5a of the lift 5, slides along the partition 4 reaching the food item 1a, the grabbing apparatus 31a takes the food item 1a from the shelf 21 and places it in the loading area 3a.

The movable slider 3 goes back to the lifting area 5a and the grabbing apparatus 31a places the food item 1a in the vertical transport area 5b. The lift reaches the ground and the conveyor 51 carries the food item 1a on the horizontal transport area 6c.

Alternatively, the food item 1a is maintained in the loading area 3a, and the lift 5 and the shifter 6 move the slider 3 with the food item 1a on board.

Once the shifter 6 reaches a second passageway 94, the food item 1a passes onto the carrier 95 that moves the food item 1a along the movement path 95a and then along the deviation 95b, taking it first to a first insulation room 81 for quality inspection and then to a second insulation room 81 for branding.

The control unit controls the positioning of the food item 1a in the original position (or in a new position) and updates the food database.

At this point, the food item 1a is put back on a rack 2 by reversing the operations described above.

The "scalera" 1 according to the invention achieves important advantages.

In fact, the "scalera" 1 is really versatile and allows the food of a "scalera" 1 to be handled in an automatic manner, and therefore in a very simple and safe manner for an operator.

In fact, the partitioning of the aisles 2b into sub-aisles 4a allows the movable slider 3 to easily take, and thus handle, all the food items 1a of the shelves 21 facing a sub-aisle 4a. Moreover, the presence of the lift 5 and the shifter 6 allows the movable slider 3 to access all the food items in the "scalera" 1.

The versatility of the "scalera" 1 is also due to the presence of the horizontal 6c and vertical 5b transport areas that allow the lift 5 and the shifter 6 to transport the food items 1a without the aid of the movable slider 3, which can thus handle other food items 1a.

Another advantage is given by the presence of the insulation rooms 81 which, by delimiting certain areas, allow for defining areas within the "scalera" 1 where operations such as branding and quality inspection can be performed in total safety. A further advantage is given by the fact that the slider 3, thanks to the handling means 31, is able to perform many operations such as turning a food item 1a upside down and brushing/cleaning the shelf 21 and/or the food item 1a.

The invention is susceptible of variations falling within the scope of the inventive concept as defined by the claims.

For example, the shifter 6 can be integrated into the movable slider 3 and adapted to allow the movable slider 3 to move at least along said translation axis 6a as well as along the longitudinal axis 2a. It can thus be identified as a steering member adapted to change the direction of travel of the movable slider 3.

In this context, all details are replaceable by equivalent elements and the materials, shapes and dimensions may be any type of materials, shapes and dimensions.

The scope of the invention is, however, limited according to the scope of the appended claims.

## Claims

1. A scalera
(1) for the ripening of food items (1a) comprising:
- racks (2), each defining a longitudinal axis (2a) and comprising
∘ shelves (21) for supporting said food items (1a); each of said shelves (21) being adapted to support a single row of said food items (1a) parallel to said longitudinal axis (2a);
∘ said racks (2) being spaced apart so that each pair of adjacent racks (2) defines therebetween an aisle (2b) which is overlooked by at least one shelf (21) per each of said adjacent racks (2);
- at least one movable slider (3) for the handling of said food items (1a);
- at least one shifter (6) adapted to move said at least one movable slider (3) among said aisles (2b) so as to change said aisle (2b) in which said at least one movable slider (3) moves;
and **characterised in that** it comprises
- partitions (4) partitioning said aisle (2b) into sub-aisles (4a) parallel to said longitudinal axis (2a); each of said partitions (4) being adapted to support said at least one movable slider (3), thus allowing said at least one movable slider (3) to slide along said sub-aisle (4a) so as to handle said food items (1a) in said shelves (21) facing said sub-aisle (4a);
- at least one lift (5) adapted to move said at least one movable slider (3) among said sub-aisles (4a) of one of said aisles (2b) so as to change said sub-aisle (4a) in which said at least one movable slider (3) moves.

2. The scalera (1) according to claim 1, wherein said lift (5) comprises at least one vertical transport area (5b) for at least one of said food items (1a).

3. The scalera (1) according to at least one of the preceding claims, wherein said shifter (6) comprises at least one horizontal transport area (6c) for at least one of said food items (1a).

4. The scalera (1) according to claims 2 and 3, wherein the height from the ground of said horizontal transport area (6c) is substantially equal to the height from the ground of said vertical transport area (5b).

5. The scalera (1) according to at least one of the preceding claims, comprising work stations (8) for processing said food items (1a); each of said work stations (8) comprises an insulation room (81) adapted to separate said work station (8) from the rest of said "scalera" (1).

6. The scalera (1) according to the preceding claim, comprising a handling system (9) adapted to move said food items (1a) between said work stations (8) and said shifter (6).

7. The scalera (1) according to at least one of the preceding claims, wherein said movable slider (3) comprises handling means (31) for handling said food items (1a); said handling means (31) comprise at least one of a grabbing apparatus (31a) for grabbing said food items (1a) and a cleaner for cleaning said food item (1a) and said shelf (21).

8. The scalera (1) according to at least one of the preceding claims, wherein each of said partitions (4) comprises a support surface (42) for said movable slider (3) subtended between said racks (2).

9. The scalera (1) according to the preceding claim, wherein said support surface (42) can be walked on.

## Patentansprüche

1. Lagerungseinheit (1) für Lebensmittel (1a), umfassend:
- Regale (2), von denen jedes eine Längsachse (2a) definiert und Folgendes umfasst
∘ Borde (21) zum Ablegen der genannten Lebensmittel (1a); wobei jedes der genannten Borde (21) geeignet ist, nur eine Reihe der genannten Lebensmittel (1a) parallel zu der genannten Längsachse (2a) zu tragen;
∘ wobei die genannten Regale (2) sich zueinander im Abstand befinden, so dass jedes Paar angrenzender Regale (2) zwischen sich einen Gang (2b) definiert, dem mindestens ein Bord (21) für jedes der genannten angrenzenden Regale (2) gegenüberliegt;
- mindestens einen beweglichen Schieber (3) zum Befördern der genannten Lebensmittel (1a);
- mindestens einen Versetzer (6), der geeignet ist, den genannten mindestens einen beweglichen Schieber (3) zwischen den genannten Gängen (2b) zu umzusetzen, um den genannten Gang (2b) zu wechseln, in dem der genannte mindestens eine Schieber (3) sich bewegt
und **dadurch gekennzeichnet, dass** sie Folgendes umfasst
- Trennvorrichtungen (4), die den genannten Gang (2b) in zu der genannten Längsachse (2a) parallele Nebengänge (4a) aufteilen; wobei jede der genannten Trennvorrichtungen (4) geeignet ist, mindestens einen beweglichen Schieber (3) zu tragen und es so dem genannten mindestens einen beweglichen Schieber (3) gestatten, entlang des genannten Nebengangs (4a) zu gleiten, um so die genannten Lebensmittel (1a) in den genannten Borden (21) zu handhaben, die vor dem genannten Nebengang (4a) liegen;
- mindestens einen Aufzug (5), der geeignet ist, den genannten mindestens einen beweglichen Schieber (3) zwischen den genannten Nebengängen (4a) des genannten Gangs (2b) umzusetzen, um den genannten Nebengang (4a) zu wechseln, in dem der genannte mindestens eine bewegliche Schieber (3) sich bewegt.

2. Lagerungseinheit (1) nach Anspruch 1, bei der der genannte Aufzug (5) mindestens eine vertikale Transportfläche (5b) für mindestens eines der genannten Lebensmittel (1a) umfasst.

3. Lagerungseinheit (1) nach mindestens einem der vorangegangenen Ansprüche, bei der der genannte Versetzer (6) mindestens eine horizontale Transportfläche (6c) für mindestens eines der genannten Lebensmittel (1a) umfasst.

4. Lagerungseinheit (1) nach den Ansprüchen 2 und 3, bei der die Höhe vom Boden der genannten horizontalen Transportfläche (6c) im Wesentlichen der Höhe vom Boden der genannten vertikalen Transportfläche (5b) entspricht.

5. Lagerungseinheit (1) nach mindestens einem der vorangegangenen Ansprüche, umfassend Arbeitsstationen (8) der genannten Lebensmittel (1a); wobei jede der genannten Arbeitsstationen (8) einen Isolierraum (81) umfasst, der geeignet ist, die genannte Arbeitsstation (8) vom Rest der genannten Lagerungseinheit (1) zu trennen.

6. Lagerungseinheit (1) nach dem vorangegangenen Anspruch, umfassend ein Umschlagsystem (9), das geeignet ist, die genannten Lebensmittel (1a) zwischen den genannten Arbeitsstationen (8) und dem genannten Versetzer (6) zu befördern.

7. Lagerungseinheit (1) nach mindestens einem der vorangegangenen Ansprüche, bei der der genannte bewegliche Schieber (3) Elemente zur Handhabung (31) der genannten Lebensmittel (1a) umfasst; wobei die genannten Elemente zur Handhabung (31) entweder mindestens einen Apparat zum Greifen (31a) der genannten Lebensmittel (1a) und eine Reinigungsvorrichtung der genannten Lebensmittel (1a) und des genannten Bords (21) umfassen.

8. Lagerungseinheit (1) nach mindestens einem der vorangegangenen Ansprüche, bei der jede der genannten Trennvorrichtungen (4) eine Auflagefläche (42) für den zwischen den genannten Regalen (2) liegenden beweglichen Schieber (3) umfasst.

9. Lagerungseinheit (1) nach dem vorangegangenen Anspruch, bei der die genannte Auflagefläche (42) begehbar ist.

## Revendications

1. Unité d'entreposage (1) pour la maturation des aliments (1a) comprenant :
- des étagères (2), chacune définissant un axe longitudinal (2a) et comprenant
∘ des supports (21) d'appui pour lesdits aliments (1a) ; chacun desdits supports (21) étant apte à soutenir une seule rangée desdits aliments (1a) parallèle audit axe longitudinal (2a) ;
∘ lesdites étagères (2) étant mutuellement espacées de sorte que chaque paire d'étagères contiguës (2) définisse entre elles un couloir (2b) vers lequel au moins un support (21) est orienté pour chacune desdites étagères contiguës (2) ;
- au moins un curseur mobile (3) de manipulation desdits aliments (1a) ;
- au moins un transporteur (6) apte à déplacer ledit au moins un curseur mobile (3) entre lesdits couloirs (2b) de façon à changer ledit couloir (2b) dans lequel ledit au moins un curseur mobile (3) se déplace
et **caractérisée en ce qu'**elle comprend
- des diviseurs (4) qui divisent ledit couloir (2b) en sous-couloirs (4a) parallèles audit axe longitudinal (2a) ; et chacun desdits diviseurs (4) étant apte à soutenir ledit au moins un curseur mobile (3) en permettant audit au moins un curseur mobile (3) de coulisser le long dudit sous-couloir (4a) de façon à manipuler lesdits aliments (1a) dans lesdits supports (21) étant orientés vers ledit sous-couloir (4a) ;
- au moins un ascenseur (5) apte à déplacer ledit au moins un curseur mobile (3) entre lesdits sous-couloirs (4a) dudit couloir (2b) de façon à changer ledit sous-couloir (4a) dans lequel ledit au moins un curseur mobile (3) se déplace.

2. Unité d'entreposage (1) selon la revendication 1, dans laquelle ledit ascenseur (5) comprend au moins une zone de transport vertical (5b) pour au moins un desdits aliments (1a).

3. Unité d'entreposage (1) selon au moins une revendication précédente, dans laquelle ledit transporteur (6) comprend au moins une zone de transport horizontal (6c) pour au moins un desdits aliments (1a).

4. Unité d'entreposage (1) selon les revendications 2 et 3, dans laquelle la hauteur de ladite zone de transport horizontal (6c) est sensiblement égale à la hauteur de ladite zone de transport vertical (5b).

5. Unité d'entreposage (1) selon au moins une revendication précédente, comprenant des postes de traitement (8) desdits aliments (1a) ; chacun desdits postes de traitement (8) comprenant une chambre isolante (81) apte à séparer ledit poste de traitement (8) du reste de ladite unité d'entreposage (1).

6. Unité d'entreposage (1) selon la revendication précédente, comprenant un système de déplacement (9) apte à déplacer lesdits aliments (1a) entre lesdits postes de traitement (8) et ledit transporteur (6).

7. Unité d'entreposage (1) selon au moins une revendication précédente, dans laquelle ledit curseur mobile (3) comprend des moyens de manipulation (31) desdits aliments (1a) ; lesdits moyens de manipulation (31) comprennent au moins un parmi un appareil de préhension (31a) desdits aliments (1a) et un dispositif nettoyeur dudit aliment (1a) et ledit support (21).

8. Unité d'entreposage (1) selon au moins une revendication précédente, dans laquelle chacun desdits diviseurs (4) comprend un plan d'appui (42) pour ledit curseur mobile (3) sous-jacent entre lesdites étagères (2).

9. Unité d'entreposage (1) selon la revendication précédente, dans laquelle ledit plan d'appui (42) est un sur lequel il est permit de marcher.
